Europäisches Patentamt

European Patent Office

Office européen des brevets

(19)

(11) Veröffentlichungsnummer: **0 075 082**
A2

(12) # EUROPÄISCHE PATENTANMELDUNG

(21) Anmeldenummer: **82106150.4**

(22) Anmeldetag: **09.07.82**

(51) Int. Cl.³: **B 60 T 13/68,** B 60 T 13/58

(30) Priorität: **18.09.81 DE 3137207**

(43) Veröffentlichungstag der Anmeldung: **30.03.83**
**Patentblatt 83/13**

(84) Benannte Vertragsstaaten: **DE FR GB IT**

(71) Anmelder: **Dr.Ing.h.c. F. Porsche Aktiengesellschaft,
Porschestrasse 42, D-7000 Stuttgart 40 (DE)**

(72) Erfinder: **Lehmann, Ulrich, Friedhofstrasse 41,
D-7251 Weissach (DE)**

(54) **Bremssystem, vorzugsweise für ein Kraftfahrzeug.**

(57) Dieses Bremssystem umfaßt eine Verzögerung des
Kraftfahrzeuges beeinflussende Regeleinrichtung und wenigstens eine Reibungsbremse.

Damit das Bremsbildsystem bei guter Funktion sich mit
einfachen Bauteilen realisieren läßt, erfolgt die Verzögerung des Fahrzeuges entlang einer von einem Meßglied
eines Meßpedals auslösbaren, gespeicherten Kennlinie.

EP 0 075 082 A2

Bremssystem, vorzugsweise
für ein Kraftfahrzeug

Die Erfindung betrifft ein Bremssystem, vorzugsweise für
ein Kraftfahrzeug, das eine die Verzögerung des Kraftfahrzeuges beeinflußende Regeleinrichtung und wenigstens eine
Reibungsbremse umfaßt.

Bei einem bekannten Bremssystem der eingangs genannten
Gattung wird durch Drehzahlmessung am Abtrieb und ein
Differenziergerät die Fahrzeugverzögerung festgestellt.
Diese Fahrzeugverzögerung wird mit einem Soll-Wert verglichen,
wobei dieser Wert zur Aussteuerung des Bremssystems dient.
Bei dieser Ausführung ist zur Messung der Winkelgeschwindigkeit und zur Weiterverarbeitung dieser Größe für das Regelgerät ein hoher apparativer Aufwand erforderlich.

Aufgabe der Erfindung ist es, eine Regelung für ein Bremssystem zu schaffen, die bei guter Wirksamkeit mit einfachen
Mitteln realisierbar ist.

Erfindungsgemäß wird diese Aufgabe durch die kennzeichnenden
Merkmale des Anspruches 1 gelöst. Weitere, die Erfindung
in vorteilhafter Weise ausgestalteten Merkmale sind in
den nachfolgenden Ansprüchen enthalten.

Die mit der Erfindung hauptsächlich erzielten Vorteile sind
darin zu sehen, daß durch die Verzögerung des Fahrzeuges
entlang der vom Meßglied des Bremspedales auslösbaren,
gespeicherten Kennlinie, eine gute Funktion des Bremssystems sichergestellt ist. Die hierfür verwendeten elektronischen
Bauteile und schaltungstechnischen Maßnahmen gewährleisten
nicht nur große Betriebssicherheit und beachtliche Standzeit, sondern zeichnen sich auch durch Einfachheit aus.
Auch besteht dadurch die Möglichkeit, ein Bremssystem bestehend aus hydrodynamischer Bremse und Reibungsbremse,
deren unlineare Einflußgrößen ein effizientes Zusammenwirken
normalerweise beeinträchtigen, einwandfrei zu regeln. Mit dem
Schwellwertgeber läßt sich die gewünschte verspätete Zuschaltung der Reibungsbremse leicht verwirklichen. Schließlich
wird durch die elektronischen Bauteile und schaltungstechnischen Maßnahmen auch noch erreicht, daß das Bremssystem
Antiblockiereigenschaften besitzt.

In der Zeichnung werden Ausführungsbeispiele der Erfindung
gezeigt, die nachstehend näher beschrieben werden.
Es zeigt

Fig. 1      einen Schaltplan zur Regelung des erfindungsgemäßen Bremssystems,

Fig. 2      einen Schaltplan entsprechend Fig. 1 eines
            anderen Ausführungsbeispiels,

Fig. 3      ein Diagramm, mit dem die Wirkungsweise des
            erfindungsgemäßen Bremssystems erläutert wird.

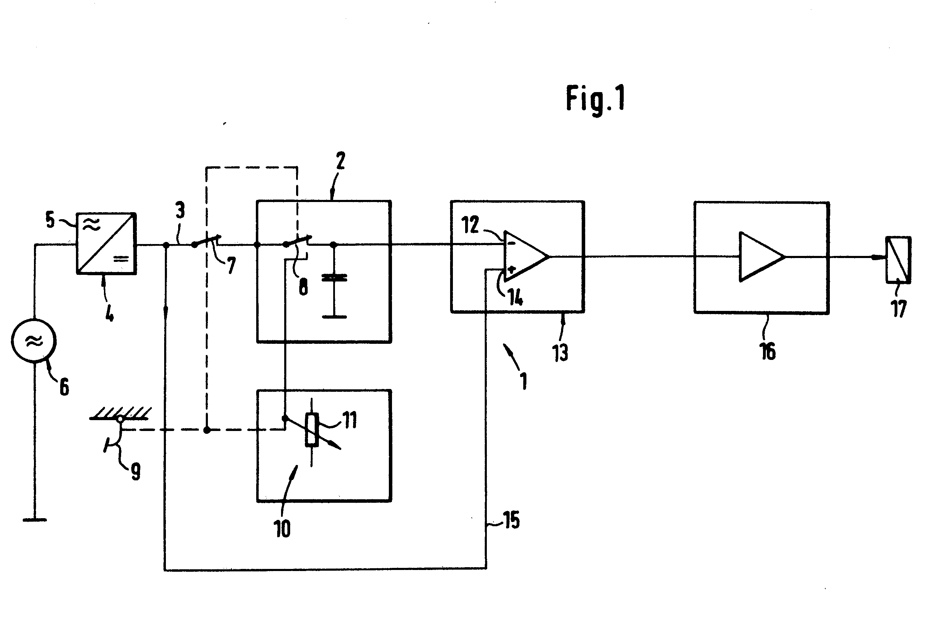

In Fig. 1 ist eine Regeleinrichtung 1 für ein Bremssystem
beispielsweise für ein Kraftfahrzeug prinzipiell dargestellt,
das wenigstens eine Reibungsbremse umfaßt. Die Regeleinrichtung 1 weist einen Integrator 2 auf, der über eine
Leitung 3 mit einem eine Fahrgeschwindigkeitsspannung erzeugenden Element 4 verbunden ist. Das Element 4 wird durch
einen Gleichrichter 5 gebildet, der an einen Tachometergeber 6 angeschlossen ist.

In der Leitung 3, zwischen Gleichrichter und Integrator 2,
sind Schalter 7, 8 angeordnet. Die Schalter 7, 8 werden in
Abhängigkeit eines Bremspedals 9 betätigt.

Das Bremspedal 9 ist an ein Meßglied 10 angeschlossen, das
im Ausführungsbeispiel ein Potentiometer 11 ist. Anstelle
dieses Potentiometers kann auch ein, beispielsweise am Hauptbremszylinder angebrachter, Druckgeber verwendet werden.

Das Potentiometer 11 ist über den Schalter 8 mit dem Integrator 3 verbunden, dessen Ausgang an einen ersten Anschlußpunkt 12 (minus) eines Differezverstärkers 13 gelegt ist. Ein
zweiter Anschlußpunkt 14 (plus) des Differenzverstärkers 13
ist unter Umgehung des Integrators 2 mit einer Leitung 15
an die Leitung 3 zwischen Schalter 7 und Gleichrichter 5 angeschlossen.

Der Differenzverstärker 13 steht mit einem Verstärker 16 in
Verbindung, der wiederum an ein Servoventil 17 angeschlossen
ist.

Ist ein mit der Regeleinrichtung 1 ausgerüstete nicht gezeigtes
Fahrzeug in Bewegung, wird der Integrator 2 ständig mit der
anliegenden Fahrgeschwindigkeitsspannung geladen; an den Anschlußpunkten 12, 14 ergeben sich gleiche Potentiale und
somit kein Ausgangssignal. Die Speichergröße und Entladegeschwindigkeit des Integrators 2 wird vom Gewicht und Bremsvermögen des Fahrzeuges bestimmt.

Bei Betätigung des Bremspedals 9 wird die Fahrgeschwindigkeitsspannung über den Schalter 7 vom Integrator getrennt.
Gleichzeitig wird der Integrator 7 mit dem Potentiometer 11
verbunden. Die nunmehr ausgelöste konstante Entladung des
Integrators 2 erzeugt eine Kennlinie, deren Verlauf vom
Bremspedal 9 bzw. Potentiometer gesteuert wird. Zwischen
der Ausgangsspannung des Integrators 2 und der Fahrgeschwindigkeitsspannung entsteht am Differenzverstärker 13
eine Differenzspannung, die unter Vermittlung des Verstärkers 16 und des Servoventil 17 zur Aussteuerung der Reibungsbremse dient, d.h., die Fahrzeugverzögerung erfolgt entlang der Kennlinie des Integrators 2.

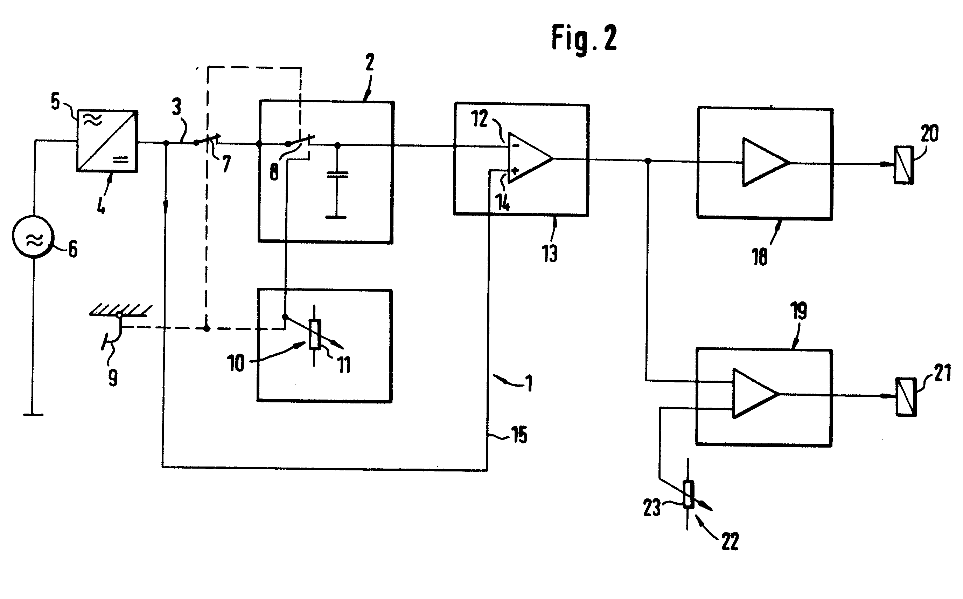

Gemäß Fig. 2 sind dem Differenzverstärker 13 zwei Verstärker 18, 19 nachgeschaltet, die mit Servoventilen 20, 21 verbunden sind.

Der Verstärker 18 und das Servoventil 20 sind an eine hydrodynamische Bremse angeschlossen; der Verstärker 19 und das Servoventil 21 an eine Reibungsbremse.

Mit dem Verstärker 18 ist ein Schwellwertglied 22 verbunden, das durch ein Potentiometer 23 gebildet wird.

Wird das Bremspedal 9 betätigt, so wird zunächst mittels des Verstärkers 18 die hydrodynamische Bremse ausgesteuert und zwar so lange, bis trotz maximaler Ansteuerung durch sie keine Verzögerung mehr erfolgt. Nunmehr ist ein das Potentiometer 23 messender Schwellwert überwunden und der Verstärker 19 steuert die Reibungsbremse aus.

Durch diese Maßnahme haben die unlinearen Einflußgrößen der hydrodynamischen Bremse und der Reibungsbremse auf einen gleichmäßigen Verzögerungsablauf des zu bremsenden Fahrzeuges keine nachteiligen Auswirkungen.

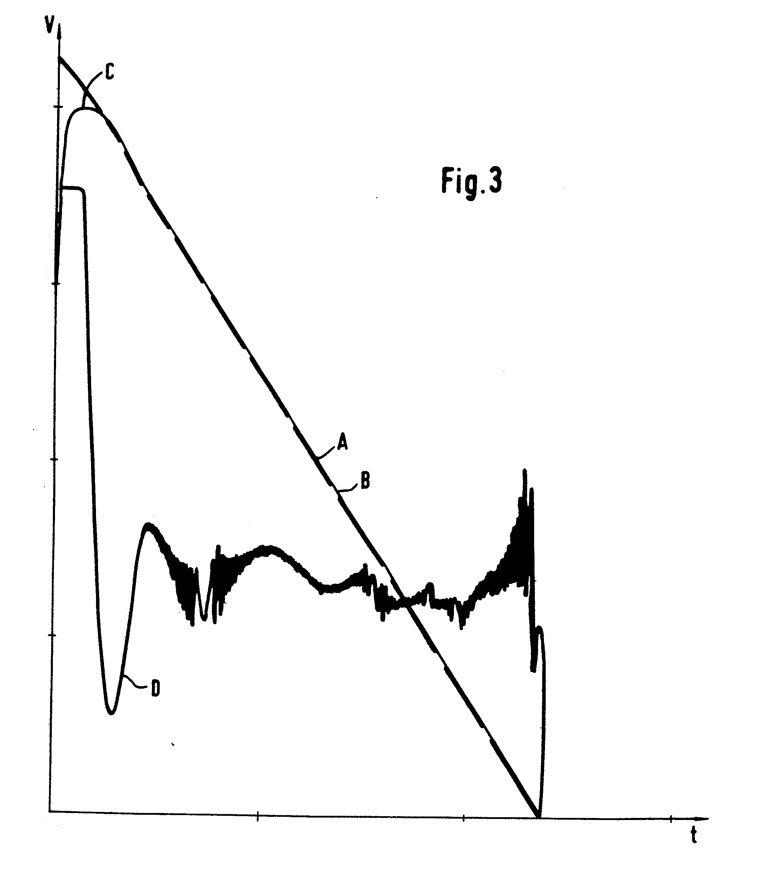

Die Funktion des Bremssystems ist anhand des bei einem Versuch aufgezeichneten Diagramms entsprechend Fig. 3 veranschaulicht. Auf der Abszisse ist die Zeit t und auf der Ordinate die Geschwindigkeit V aufgetragen.

Die Linie A ist die Kennlinie, die vom Integrator 2 in Abhängigkeit des Bremspedals 9 erzeugt wird. Entlang dieser Linie verläuft die Linie B, die der tatsächlichen Fahrzeugverzögerung entspricht, d.h., die Fahrzeugverzögerung erfolgt entlang der Kennlinie (Linie A) des Integrators 2.
Der Verlauf der Linie B bei C verdeutlicht den Einregelvorgang. Die Linie D gibt die über den Bremsvorgang auftretenden
Bremskräfte wieder.

Patentansprüche

1. Bremssystem, vorzugsweise für ein Kraftfahrzeug, das eine die Verzögerung des Kraftfahrzeuges beeinflußende Regeleinrichtung und wenigstens eine Reibungsbremse umfaßt, dadurch gekennzeichnet, daß die Regeleinrichtung (1) und das Bremssystem in der Weise zusammenwirken, daß die Verzögerung (Linie B) des Fahrzeuges entlang einer von einem Meßglied (10) eines Bremspedals (9) auslösbaren, gespeicherten Kennlinie (Linie A) erfolgt.

2. Bremssystem nach Anspruch 1, dadurch gekennzeichnet, daß die Regeleinrichtung (1) einen die Kennlinie (Linie A) erzeugenden Integrator (2) umfaßt, der von einem eine Fahrgeschwindigkeitsspannung liefernden Element (4) geladen wird, mit dem Meßglied (10) verbunden ist und mit einem ersten Anschlußpunkt (12) eines Differenzverstärkers (13) zusammenwirkt, wobei ein zweiter Anschlußpunkt (14) des Differenzverstärkers (13) unter Umgehung des Integrators (2) an den Ausgang des Elementes (4) gelegt ist und daß der Differezverstärker (13) mit einem die Ansteuerung des Bremssystems bewirkenden Verstärker (16; 18 und 19) in Verbindung steht.

3. Bremssystem nach Anspruch 2, dadurch gekennzeichnet, daß das Element (4) durch einen mit einem Tachometergeber (6) verbundenen Gleichrichter (5) gebildet wird.

4. Bremssystem nach den Ansprüchen 1 und 2, dadurch gekennzeichnet, daß das Meßglied (10) durch ein Potentiometer (11), Druckgeber oder dergleichen dargestellt ist.

5. Bremssystem das neben der Reibungsbremse eine hydrodynamische Bremse umfaßt, insbesondere nach den Ansprüchen
1 bis 4, dadurch gekennzeichnet, daß der Differenzverstärker (13) mit zwei Verstärkern (18 und 19) in Verbindung
steht, wovon der eine Verstärker (18) die hydrodynamische
Bremse und der andere Verstärker (19) die Reibungsbremse
aussteuert, dergestalt, daß zuerst die hydrodynamische
Bremse und dann die Reibungsbremse wirksam wird.

6. Bremssystem nach Anspruch 5, dadurch gekennzeichnet, daß
der Verstärker (19) die Reibungsbremse in Abhängigkeit eines
Schwellwertgliedes (22) ansteuert.

7. Bremssystem nach Anspruch 6, dadurch gekennzeichnet, daß
das Schwellwertglied (22) durch ein Potentiometer (23) gebildet wird.

# Fig.1

Fig. 2

W 762
0075082

Fig.3